(19) **Europäisches Patentamt / European Patent Office / Office européen des brevets**

(11) **EP 1 889 398 B1**

(12) **EUROPEAN PATENT SPECIFICATION**

(45) Date of publication and mention
of the grant of the patent:
**13.01.2016 Bulletin 2016/02**

(21) Application number: **06749987.1**

(22) Date of filing: **12.04.2006**

(51) Int Cl.:
***G06F 7/72*** (2006.01)

(86) International application number:
**PCT/US2006/013795**

(87) International publication number:
**WO 2006/124160 (23.11.2006 Gazette 2006/47)**

(54) **Randomized modular polynomial reduction method and hardware therefore**

Verfahren zur Randomisierten Modularpolynomreduktion und Hardware dafür

Méthode de réduction polynomiale modulaire randomisée et matériel destiné à la mise en oeuvre de ce procédé

(84) Designated Contracting States:
**DE GB**

(30) Priority: **12.05.2005 FR 0504779**
**15.08.2005 US 203939**

(43) Date of publication of application:
**20.02.2008 Bulletin 2008/08**

(73) Proprietor: **Inside Secure**
**13590 Meyreuil (FR)**

(72) Inventors:
• **DUPAQUIS, Vincent**
**13120 Biver (FR)**
• **DOUGUET, Michel**
**13008 Marseille (FR)**

(74) Representative: **de Roquemaurel, Bruno et al**
**OMNIPAT**
**24 Place des Martyrs de la Résistance**
**13100 Aix en Provence (FR)**

(56) References cited:
WO-A-2004/111831    US-A1- 2002 055 962
US-A1- 2003 044 014    US-A1- 2003 079 139

• DHEM: "Efficient Modular Reduction Algorithm in Fq[x] and its Application to "Left to Right" Modular Multiplication in F2[x]" CHES 2003, 2003, pages 203-213, XP002358295 Berlin Retrieved from the Internet: URL:http://springerlink.metapress.com/medi a/m5upwlrxwj3374nm8eeq/contributions/d/k/n /f/dknf2qhepebwmt1h.pdf> [retrieved on 2005-12-08]
• BAJARD ET AL: "Arithmetic Operations in the Polynomial Modular Number System" RESEARCH REPORT LIRMM, no. 04030, September 2004 (2004-09), pages 1-26, XP002358296 Montpelier Retrieved from the Internet: URL:http://papyrus.lirmm.fr/GEIDEFile/Laur ent.Imbert_document_RR04030-lirmm.PDF?Arch ive=191246891942&File=Laurent_Imbert_docum ent_RR04030%2Dlirmm_PDF> [retrieved on 2005-12-08]
• MORALES-SANDOVAL ET AL.: 'On the hardware design of an elliptic curve cryptosystem' COMPUTER SCIENCE, 2004. ENC 2004. PROCEEDINGS OF THE FIFTH MEXICAN INTERNATIONAL CONFERENCE pages 64 - 70, XP010730395

**Description**

TECHNICAL FIELD

The invention relates to arithmetic processing and calculating systems and computer-implemented methods, especially for use in cryptography applications. The invention relates in particular to residue arithmetic involving modular reduction of polynomials in a finite field $GF(2^n)$, especially computations derived from the Barrett reduction method.

BACKGROUND ART

Numerous cryptographic algorithms make use of large-integer multiplication (or exponentiation) and reduction of the product to a residue value that is congruent for a specified modulus that is related to the cryptographic key. Some cryptographic algorithms, including the AES/Rijndael block cipher and also those based on discrete logarithms and elliptic curves, perform arithmetic operations on polynomials in a finite field, such as the binary field $GF(2^n)$, including multiplication (or exponentiation) and modular reduction operations on such polynomials. Mathematical computations performed by cryptographic systems may be susceptible to power analysis and timing attacks. Therefore, it is important that computations be secured so that information about the key cannot be obtained.

At the same time, it is important that these computations be fast and accurate. Multiplication and reduction, whether operated upon large integers or upon polynomials in a finite field, is usually the most computationally intensive portion of a cryptographic algorithm. Several distinct computational techniques have been developed for efficient modular reduction, including those known as the Quisquater method, the Barrett method and the Montgomery method, along with modifications involving pre-computation and table look-up. These well-known techniques are described and compared in the prior art. See, for example: (1) A. Bosselaers et al., "Comparison of three modular reduction functions", Advances in Cryptology/Crypto '93, LNCS 773, Springer-Verlag, 1994, pp. 175-186. (2) Jean François Dhem, "Design of an efficient public-key cryptographic library for RISC-based smart cards", doctoral dissertation, Université catholique de Louvain, Louvain-la-Neuve, Belgium, May 1998. (3) C. H. Lim et al., "Fast Modular Reduction With Precomputation", preprint, 1999 (available from CiteSeer Scientific Literature Library, citeseer.nj.nec.com/109504.html). (4) Hollmann et al., "Method and Device for Executing a Decrypting Mechanism through Calculating a Standardized Modular Exponentiation for Thwarting Timing Attacks", U.S. Patent No. 6,366,673 B1, Apr. 2, 2002 (based on application filed Sept. 15, 1998) (5) J-F Dhem, "Efficient Modular Reduction Algorithm in $F_q[x]$ and Its Application to "Left to Right" Modular Multiplication in $F_2[x]$".

An objective of the present invention is to provide an improvement of the Barrett modular reduction method and corresponding computing apparatus, especially as applied to polynomials, which is more secure against cryptoanalysis attacks, while still providing fast and accurate results.

Another objective of the present invention is to provide the aforementioned improved method and apparatus which speeds up quotient estimation for use in the modular reduction of polynomials.

SUMMARY OF THE INVENTION

These objects are met by a computer-implemented method for modular reduction of polynomials in a binary finite field $GF(2^n)$ in which a polynomial quotient used for the reduction computation is estimated (to at least the correct polynomial degree) using a precomputed scaled inverse of the polynomial modulus as a multiplier. The polynomial remainder resulting from the reduction is always congruent to the corresponding intermediate product relative to the specified irreducible polynomial modulus of degree n, but is typically larger (in terms of polynomial degree) than the minimal residue value and differs in a random manner for each execution. Because the estimation error is deliberately randomized, the method is more secure against cryptoanalysis. Yet the intermediate results are mathematically equivalent (congruent to the true results), and a final result may be obtained by processing a final strict reduction without randomization, thus achieving the accuracy needed for the invertibility of cryptographic operations.

The hardware used to execute the method steps of the invention includes a random number generator to inject random error into the quotient estimation. A computation unit with memory access operates under the control of an operation sequencer executing firmware to carry out the word-wide multiply-accumulate steps of multi-word polynomial multiplication and modular reduction involving word-size shifts. The computation unit may include multiply-accumulate hardware dedicated to finite field polynomial operations, or may be selectable to perform either natural or polynomial arithmetic.

BRIEF DESCRIPTION OF THE DRAWINGS

Fig. 1 is a schematic plan view of computational hardware in accord with the present invention (including a random number generator unit), which is used to execute the modular reduction method of the present invention.

Fig. 2 is a flow diagram illustrating the general steps in the present modular reduction method.

DETAILED DESCRIPTION OF THE INVENTION

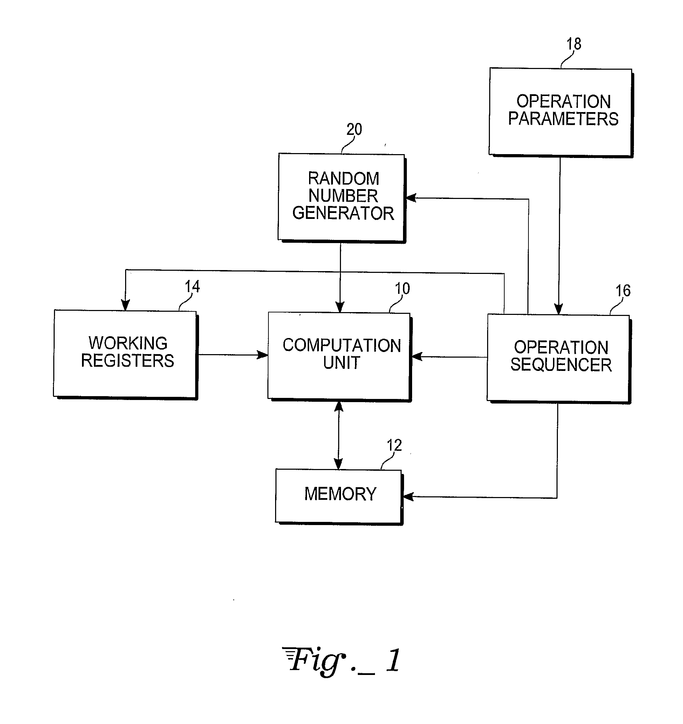

With reference to Fig. 1, computational hardware includes a computation unit 10 that is able to perform word-wide finite field multiply and multiply-accumulate steps on polynomial operands retrieved from memory (RAM) 12 and working registers 14. Registers 14 may be the same hardware registers that would be responsible for carry injection in normal integer operations. An operation sequencer 16 comprises logic circuitry for controlling the computation unit 10 in accord with firmware or software instructions for the set of operations to carry out the multi-word finite field polynomial multiplication (or exponentiation) and the modular reduction using an irreducible polynomial basis. The operation parameters, stored in registers 18 accessible by the operation sequencer 16, consist in pointers that enable the operation sequencer to locate an operand within the RAM 12, as well as information about the lengths (number of words) of the operands and the destination address of the intermediate results.

As so far described, the apparatus is substantially similar to other available hardware adapted for multi-word polynomial arithmetic operations. Polynomial arithmetic carried out in the binary finite field $GF(2^n)$ differs from natural arithmetic in ignoring carries and in the equivalence of addition and subtraction. The computation unit may include multiply-accumulate hardware dedicated to finite field polynomial operations, or may be dual-purpose natural/polynomial arithmetic hardware that can be selected to perform either natural or polynomial arithmetic. Other than the details of the reduction steps, which will be described below, the firmware or software instructions are also similar to prior programs for executing efficient multi-word polynomial multiplication or exponentiation in word-wide segments.

Unlike prior hardware of this type, the hardware in Fig. 1 also includes a random number generator 20, which for example can be any known pseudo-random number generator circuit. The random number generator performs a calculation and outputs a random number whose bits are interpreted as the binary coefficients of a random polynomial to be used in the present method. Here, the random number generator 20 is accessed by the computation unit 10, as directed by the operation sequencer 16 in accord with the program instructions implementing the method of the present invention, in order to inject the randomized error quantity into the quotient estimation, as described below.

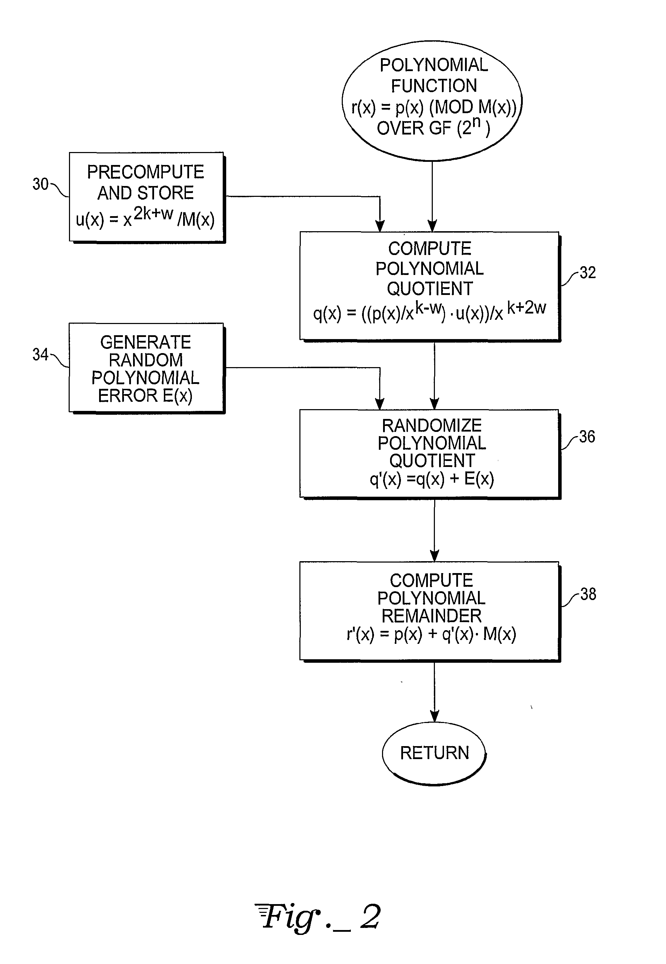

With reference to Fig. 2, the method of the present invention is an improvement of the Barrett modular reduction technique, providing faster quotient estimation and resistance to cryptoanalytic attack, and applies the modular reduction technique to polynomials in the binary finite field $GF(2^n)$. The method is executed by the hardware in Fig. 1.

Modular arithmetic with polynomials is similar in some respects to modular arithmetic with integers, although extending this to polynomials over a binary finite field $GF(2^n)$ requires certain modifications to the basic operation. Let us first introduce polynomials over a field. To any multiple $(a_{m-1}, ... a_1, a_0)$ of members of a field F, we can associate a polynomial in x of degree (m-1) : $a_{m-1}x^{m-1} + ... a_1x^1 + a_0x^0$. In the case of any binary finite field, the members of the field are {0,1} and so the polynomial coefficients $a_i$ are likewise 0 or 1. This concept adapts particularly well to computer hardware, which is binary in nature, since each bit can be interpreted as a finite field element. For example, we can associate each binary byte value $[a_7\ a_6\ a_5\ a_4\ a_3\ a_2\ a_1\ a_0]$ with a corresponding polynomial over $GF(2^n)$ of degree 7 (or less): $a_7x^7 + a_6x^6 + a_5x^5 + a_4x^4 + a_3x^3 + a_2x^2 + a_1x + a_0$. Hence, e.g., the byte value [01100011] is interpreted as the binary polynomial $x^6 + x^5 + x + 1$. Longer multi-byte sequences may likewise be interpreted as polynomials of higher degree, provided that, over the binary finite field $GF(2^n)$, the polynomial degree (m-1) is less than n, in order for the polynomial to belong to that field. (Note: when comparing the relative sizes of polynomial, the comparison is performed degree by degree, starting with the polynomial coefficients for the largest degree in x.) Addition and subtraction of polynomials in a field are carried out in the usual manner of adding or subtracting the coefficients for each degree separately,

$$\sum_i a_i x^i \pm \sum_i b_i x^i = \sum_i (a_i \pm b_i)x^i$$

However, for any binary field, the members are {0,1}, so that addition and subtraction of the field elements is performed modulo 2 ($0\pm0 = 0$, $0\pm1 = 1\pm0 = 1$, $1\pm1 = 0$). Note that, in this case, subtraction is identical to addition. In computer hardware, addition/subtraction modulo 2 is performed with a logical XOR operation upon the array of the bits. For example, $(x^6 + x^4 + x^2 + x+1) + (x^7 + x + 1) = (x^7 + x^6 + x^4 + x^2)$ ; or in binary notation $[01010111] \oplus [10000011] = [11010100]$. Polynomial multiplication is ordinarily defined (for infinite fields) by:

$$\left(\sum_i a_i \, x^i\right) \cdot \left(\sum_j b_j x^j\right) = \sum_k c_k x^k \quad ,$$

where the coefficient $c_k$ is given by the convolution: $c_k = \displaystyle\sum_{i+j=k} a_i b_j$ · (Again, in a binary field, the summation is performed modulo 2.)

However, in a finite field, this definition must be modified in order to ensure that the product also belongs to the field. In particular, ordinary polynomial multiplication is followed by modular reduction by a modulus $m(x)$ of degree n (where n is the dimension of the finite field, as in $GF(2^n)$. The modulus $m(x)$ is preferably chosen to be an irreducible polynomial (the polynomial analogue of a prime number, i.e. one that cannot be factored into nontrivial polynomials over the same field.) For example, in the AES/Rijndael symmetric block cipher, operations are performed on bytes (polynomials of degree 7 or less) in the binary finite field $GF(2^8)$, using the particular irreducible polynomial $m(x) = x^8 + x^4 + x^3 + x + 1$ as the chosen basis for modular reduction when performing polynomial multiplication. As an example of polynomial multiplication in a binary finite field using the particular $m(x)$ specified for AES: $(x^6 + x^4 + x^2 + x + 1) (x^7 + x + 1) = (x^{13} + x^{11} + x^9 + x^8 + x^6 + x^5 + x^4 + x^3 + 1)$, which after reduction, gives $(x^7 + x^6 + 1)$.

Let F[x] be the set of polynomials all of whose coefficients are members of a field F. If the modulus $m(x)$ is a polynomial of degree d in F[x], then for polynomials $p(x)$, $r(x) \in$ F[x], we say that p (x) is congruent to $r(x)$ modulo $m(x)$, written as $p(x) \equiv r(x) \pmod{m(x)}$, if and only if $m(x)$ divides the polynomial $p(x) - r(x)$; in other words $p(x) - r(x)$ is a polynomial multiple of $m(x)$, that is, $p(x) - r(x) = q(x) \cdot m(x)$ for some polynomial $q(x) \in$ F[x].

Equivalently, $p(x)$ and $r(x)$ have the same remainder upon division by $m(x)$. Modular reduction of a polynomial $p(x)$, which could be an ordinary product of polynomials $a(x)$ and $b(x)$ in F[x], i.e. $p(x) = a(x) \cdot b(x)$, involves finding a polynomial quotient $q(x)$ such that the remainder or residue $r(x)$ is a polynomial of degree less than $m(x)$, i.e., $\deg(r(x)) < d$. The polynomial residue $r(x)$, which is congruent with $p(x)$, is the polynomial value we ultimately want. In the binary finite field $GF(2^n)$, $m(x)$ will be an irreducible polynomial of degree n and the residue polynomial $r(x)$ that is sought will be of degree less than n; but $p(x)$ and hence also $q(x)$ can be any degree, and at least the polynomial $p(x)$ to be reduced is often of degree larger than m, as for example when $p(x)$ is a product. In any case, the basic problem in any modular reduction method is in efficiently obtaining a quotient, especially for polynomial $p(x)$ and $m(x)$ of large degree. In the context of cryptographic applications, an additional problem is in performing the reduction operation in computational hardware in a way that is secure from power analysis attacks.

Barrett's method, originally devised for integer reduction operations, involves pre-calculating and storing a scaled estimate of the modulus' reciprocal, U, and replacing the long division with multiplications and bit shifts (dividing by x) in order to estimate the quotient. With appropriate choice of parameters, the error in the quotient estimate is at most two. The present invention adapts Barrett's method to modular reduction of polynomial in a binary finite field and also improves upon Barrett's method with a faster estimation of the quotient and by intentionally injecting a random error into the quotient prior to computing the remainder. The resulting randomized remainder will be slightly larger than (in terms of polynomial degree), but congruent with, the residue value.

Let k be the size of the polynomial modulus $m(x)$ in degree, where

$$m(x) \; = \; \Sigma_{i=0}^{k} \, m_i \cdot x^i,$$

with

$$m_k \; = \; 1, \; m_i \; \in \; \{0,1\} \; \text{for} \; k-1 \; \geq \; i \; \geq \; 0$$

and let $p(x)$ be the polynomial to be reduced, up to a degree $\ell$, where

$$p(x) \; = \; \sum_{j=0}^{\ell} \, p_j \cdot x^j,$$

with

$$p_j \; \in \; \{0,1\} \; \text{for} \; \ell \; \geq \; j \; \geq \; 0$$

$$\deg(p(x)) \leq 2 \cdot k + 1$$

We begin by precomputing and storing (step 30 in Fig. 2) a constant polynomial u(x) representing the scaled reciprocal of the modulus m(x)

$$u(x) = x^{2k+1}/m(x)$$

This stored value is then subsequently used in all polynomial reduction operations for this particular modulus m(x). u(x) is always of degree k for every modulus m(x) that is not a simple power of x.

To perform a modulo reduction of p(x), we estimate a polynomial quotient q(x) (step 32) using the stored value u(x):

$$q(x) = ((p(x)/x^{k-1}) \cdot u(x))/x^{k+2}$$

For a modulus m(x) of high degree (multi-word), the operation is performed with word shifts rather than bit shifts. With a word size w, we can define $u(x) = x^{2k+w}/m(x)$ and estimate a quotient $q(x) = ((p(x)/x^{k-w}) \cdot u(x))/x^{k+2w}$. In this case, the polynomial p (x) can have a slightly larger degree: $\deg(p(x)) \leq 2 \cdot k + w$. This simplifies handling of the polynomial quantities in the computational hardware. This computation requires only binary finite field polynomial multiplications (without reduction) and shifts of polynomial degree.

At this stage (step 36), a random polynomial error E(x) is injected into the computed polynomial quotient to obtain a randomized quotient, q'(x) = q(x) + E(x). The random polynomial error E(x) may be generated (step 34) by any known random or pseudo-random number generator (hardware or software), where the binary value generated is interprets as a polynomial in the manner already described above. The only constraint is that the polynomial degree of the error fall within a specified range, such as

$$0 \leq \deg(E(x)) < w/2$$

For a modulus m(x) of high degree (multi-word), the error should be limited to a few bits, e.g., less than half a word, i.e., deg(E(x)) < w/2. This limits the potential error contributed by the random generator to a specified number of bits, e.g. half a word, in addition to any error arising from the quotient estimation itself.

Next, we compute (step 38) the remainder r'(x), which will be congruent (modulo m(x)) with the residue value r(x):

$$r'(x) = p(x) + q'(x) \cdot m(x)$$

Because a random polynomial error E is introduced into the polynomial quotient q(x), the calculated remainder r'(x) will be slightly larger in degree than the modulus m(x).

The remainder r' (x) can be used in further calculations, the result of which if necessary may again be reduced. (The error remains bounded.)

Alternatively, depending upon the needs of the particular application, the residue r(x) can be calculated from the remainder r' (x) by applying ordinary GF(2$^n$) polynomial reduction with the modulus m(x) to obtain a polynomial value smaller than m(x).

Randomizing the modular reduction provides security against various cryptoanalytic attacks that rely upon consistency in power usage to determine the modulus. Here, the binary field polynomial reduction of p(x) modulo m(x) varies randomly from one execution to the next, while still producing an intermediate remainder r' (x) that is congruent. The sequence of binary field polynomial reduction at the end to generate a final residue value r(x) also varies randomly from one execution to the next because it operates upon different remainders r' (x). The polynomial p(x) to be reduced in this way can be obtained from a variety of different arithmetic operations, including multiplication, squaring, exponentiation, addition, etc. Likewise, the modulus m(x) to be used can be derived in a variety of ways, most usually in cryptography from a key. The randomized modular reduction method of the present invention is useful in many cryptographic algorithms that rely upon such binary field GF(2$^n$) polynomial reductions, including the Rijndael/AES symmetric block cipher, as well as discrete logarithm-based public-key cryptography systems.

**Claims**

1. A computer hardware-implemented cryptographic method comprising a modular polynomial reduction operation in a binary finite field, the modular polynomial reduction operation comprising:

   precomputing and storing (30) in memory (12) a polynomial constant u (x) representing a bit-scaled reciprocal of a multi-word polynomial modulus m(x) having a length defined by a number of words;
   estimating (32) an approximate polynomial quotient q(x) for a polynomial p(x) to be reduced modulo m(x), wherein said estimating is executed upon p(x) in a computation unit by a polynomial multiplication over the binary finite field by said constant u(x);
   **characterized by**:

   said estimating (32) further comprising performing word-size shifts;
   said modular polynomial reduction operation further comprising:

   generating (34) in a random number generator (20) a random polynomial error value E(x) having a degree that falls within a predetermined range and applying said polynomial error value to said approximate polynomial quotient to obtain a randomized polynomial quotient q'(x) = q(x) + E(x); and
   calculating (38) a polynomial remainder r' (x) = p(x) + q' (x) -m(x) in said computation unit (10) said remainder r'(x) being of higher degree than said modulus m(x) but congruent to p(x) modulo m(x) and where the degree of p(x) is less than or equal to 2k+w, w being a word size in bits of the computer hardware and k being the length in bit number of the words representing the modulus m(x).

2. The method of claim 1 wherein precomputing said polynomial constant u(x) is performed according to the equation $u(x) = x^{2k+w}/m(X)$.

3. The method of claim 2 wherein the quotient is estimated as $q(x) = ((p(x)/x^{k-w}) \cdot u (x)) /x^{k+2w}$.

4. The method of one of claims 1 to 3 wherein the random number generator has a specified error limit of one-half word, whereby $0 < \deg(E(x)) < w/2$.

5. A computational hardware for executing a cryptographic program comprising a polynomial modular reduction operation over a binary finite field, the hardware comprising:

   a computation unit (10) adapted to perform word-wide finite-field multiply and accumulate steps on polynomial operands retrieved from a memory (12) and polynomial coefficient intermediate results from a set of working registers (14);
   a random number generator (20) for generating a random polynomial error value E(x) having a degree that falls within a predetermined range;
   an operations sequencer (16) comprising logic circuitry for controlling the computation unit (10) and random number generator in accord with program instructions so as to carry out the method of one of claims 1 to 4.

6. The computation hardware of claim 5 further comprising operation parameter registers (18) accessible by said operations sequencer (16), said registers containing any one or more of (a) pointers for locating word-size coefficients of polynomial operands within said memory (12) or working registers (14), (b) information about word lengths of polynomial operands, and (c) destination address information for intermediate results of operation steps.

7. The computation hardware of one of claims 5 and 6 wherein the pre-stored polynomial constant u(x) in said memory (12) is obtained from a precomputation according to the equation $u (x) = x^{2k+w}/m(x)$.

8. The computation hardware of claim 7 wherein the estimation of said approximate polynomial quotient q(x) performed by said computation unit (10) under control of said operations sequencer (16) carrying out program instructions is done according to the equation

$$q(x) = ((p(x) \cdot x^{k-w}) \cdot u(x))/x^{k+2w}.$$

9.  The computation hardware of one of claims 5 to 8 wherein the random number generator (20) has a specified error limit of one-half word, whereby 0 < deg(E(x)) < w/2.

**Patentansprüche**

1.  Kryptografisches computer hardware implementiertes Verfahren, umfassend eine modulare Polynomialzeitreduktionsoperation in einem endlichen Binärkörper, wobei die modulare Polynomialzeitreduktionsoperation folgendes umfasst:

    Vorausberechnen und Speichern (30) in einem Speicher (12) einer Polynomkonstante u(x), die eine bitskalierte Reziproke eines mit einer durch eine Anzahl von Wörtern definierten Länge Mehrwort-Polynommoduls m(x) darstellt;
    Schätzung (32) eines approximativen Polynomquotienten q(x), so dass ein Polynom p(x) modulo m(x) reduziert wird, wobei die genannte Schätzung an p(x) in einer Berechnungseinheit durch eine Polynommultiplikation auf den endlichen Binärkörper mit der genannten Konstante u(x) ausgeführt wird;
    **dadurch gekennzeichnet, dass**:

    die genannte Schätzung (32) weiterhin die Ausführung von Wortgröße-Verschiebungen umfasst;
    wobei die genannte modulare Polynomialzeitreduktionsoperation weiterhin folgendes umfasst:

    Erzeugen (34) eines zufälligen Polynomfehlerwertes E(x) von einem innerhalb eines vorbestimmten Bereichs liegenden Grad in einem Zufallszahlengenerator (20), und Anwenden des genannten Polynomfehlerwertes auf den genannten approximativen Polynomquotienten, um einen randomisierten Polynomquotienten q'(x) = q(x) + E(x) zu erhalten; und
    Berechnen (38) eines Polynomrestes r'(x) = p(x) + q'(x) ·m(x) in der genannten Berechnungseinheit (10), wobei der genannte Rest r' (x) einen höheren Grad hat als das genannte Modul m(x), aber kongruent zu p(x) modulo m(x) ist, und bei dem der Grad von p(x) gleich oder kleiner ist als 2k+w, wobei w eine Wortgröße der Computerhardware in Bits und k die Länge der das Modul m(x) darstellenden Wörter in Bitanzahl ist.

2.  Verfahren nach Anspruch 1, bei dem das Vorausberechnen der genannten Polynomkonstante u(x) gemäß der Gleichung $u(x) = x^{2k+w}/m(x)$ ausgeführt wird.

3.  Verfahren nach Anspruch 2, bei dem der Quotient als $q(x) = ((p(x)/x^{k-w}) \cdot (x)) /x^{k+2w}$ abgeschätzt wird.

4.  Verfahren nach einem der Ansprüche 1 bis 3, bei dem der Zufallszahlengenerator eine spezifizierte Fehlergrenze von einem halben Wort hat, wobei 0 < deg (E(x)) < w/2.

5.  Berechnungshardware zum Ausführen eines kryptografischen Programms umfassend eine modulare Polynomialzeitreduktionsoperation auf einem endlichen Binärkörper, wobei die Hardware folgendes umfasst:

    eine Berechnungseinheit (10), die angepasst ist, um wortbreite Multiplikations- und Akkumulationsschritte im endlichen Binärkörper an aus einem Speicher (12) gewonnenen Polynomoperanden und an aus einem Satz von Arbeitsregistern (14) gewonnenen Polynomkoeffizient-Zwischenergebnissen auszuführen;
    einen Zufallszahlengenerator (20) zum Erzeugen eines zufälligen Polynomfehlerwertes E(x) von einem innerhalb eines vorbestimmten Bereichs liegenden Grad;
    eine Operationsablaufsteuereinheit (16), umfassend Logikschaltungen zum Steuern der Berechnungseinheit (10) und des Zufallszahlengenerators gemäß Programminstruktionen, um das Verfahren nach einem der Ansprüche 1 bis 4 auszuführen.

6.  Berechnungshardware nach Anspruch 5, weiterhin umfassend Operationsparameterregister (18), auf die durch die genannte Operationsablaufsteuereinheit (16) zugegriffen werden kann, wobei die genannten Register einen oder mehrere von (a) Zeigern für das Lokalisieren von Wortgröße-Koeffizienten von Polynomoperanden innerhalb des genannten Speichers (12) oder der Arbeitsregister (14), (b) Information über Wortlängen von Polynomoperanden, und (c) Bestimmungsadressinformation für Zwischenergebnisse von Operationsschritten enthalten.

7.  Berechnungshardware nach einem der Ansprüche 5 und 6, bei der die im genannten Speicher (12) vorgespeicherte Polynomkonstante u(x) aus einer Vorausberechnung gemäß der Gleichung u(x) = $x^{2k+w}$/m(x) erhalten wird.

**8.** Berechnungshardware nach Anspruch 7, bei der die durch die genannte Berechnungseinheit (10), gesteuert durch die genannte Programminstruktionen ausführende Operationsablaufsteuereinheit (16) ausgeführte Schätzung des genannten approximativen Polynomquotienten q(x) gemäß der Gleichung q(x) = ((p (x) $\cdot x^{k-w}$) (x))/$^{k+2w}$ ausgeführt wird.

**9.** Berechnungshardware nach einem der Ansprüche 5 bis 8, bei der der Zufallszahlengenerator (20) eine spezifizierte Fehlergrenze von einem halben Wort hat, wobei 0 < deg(E(x)) < w/2.

## Revendications

**1.** Procédé cryptographique mis en oeuvre par matériel informatique comprenant une opération de réduction polynomiale modulaire dans un corps fini binaire, l'opération de réduction polynomiale modulaire comprenant :

le calcul préalable et le stockage (30) en mémoire (12) d'une constante polynomiale u(x) représentant un réciproque à échelle binaire d'un module polynomial multi-mots m(x) ayant une longueur définie par un certain nombre de mots ;
l'estimation (32) d'un quotient polynomial approximatif q(x) pour qu'un polynôme p(x) soit réduit modulo m(x), ladite estimation étant exécutée sur p(x) dans une unité de calcul par une multiplication polynomiale sur le corps fini binaire par ladite constante u(x) ;
**caractérisé en ce que** :

ladite estimation (32) comprend en outre l'exécution de décalages à la taille d'un mot ;
ladite opération de réduction polynomiale modulaire comprenant en outre :

la génération (34) dans un générateur de nombres aléatoires (20) d'une valeur d'erreur polynomiale aléatoire E(x) ayant un degré compris dans une plage prédéterminée et l'application de ladite valeur d'erreur polynomiale audit quotient polynomial approximatif pour obtenir un quotient polynomial randomisé q'(x) = q(x) + E(x) ; et
le calcul (38) d'un reste polynomial r' (x) = p(x) + q' (x) $\cdot$m(x) dans ladite unité de calcul (10), ledit reste r'(x) étant d'un degré supérieur audit module m(x), mais congruent avec p(x) modulo m(x) et où le degré de p(x) est inférieur ou égal à 2k+w, w étant une taille de mot en bits du matériel informatique et k étant la longueur en nombre de bits des mots représentant le module m(x).

**2.** Procédé selon la revendication 1, dans lequel le calcul préalable de ladite constante polynomiale u(x) est réalisé suivant l'équation u(x) = $x^{2k+}$w/m(x).

**3.** Procédé selon la revendication 2, dans lequel le quotient est estimé sous la forme q(x) = ((p(x)/$x^{k-w}$) $\cdot$u (x)) /$x^{k+2w}$.

**4.** Procédé selon l'une des revendications 1 à 3, dans lequel le générateur de nombres aléatoires a une limite d'erreur spécifiée d'un demi-mot, de sorte que 0 < deg (E(x)) < w/2.

**5.** Matériel de calcul pour exécuter un programme cryptographique comprenant une opération de réduction modulaire polynomiale sur un corps fini binaire, le matériel comprenant :

une unité de calcul (10) adaptée pour réaliser des étapes de multiplication et d'accumulation dans le corps fini à la largeur d'un mot sur des opérandes polynomiaux extraits d'une mémoire (12) et sur des résultats intermédiaires de coefficient polynomial extraits d'un ensemble de registres de travail (14) ;
un générateur de nombres aléatoires (20) pour générer une valeur d'erreur polynomiale aléatoire E(x) ayant un degré compris dans une plage prédéterminée ;
un séquenceur d'opérations (16) comprenant une circuiterie logique pour commander l'unité de calcul (10) et le générateur de nombres aléatoires en accord avec des instructions de programme de manière à exécuter le procédé selon l'une des revendications 1 à 4.

**6.** Matériel de calcul selon la revendication 5, comprenant en outre des registres de paramètres d'opération (18) accessibles par ledit séquenceur d'opérations (16), lesdits registres contenant un ou plusieurs parmi (a) des pointeurs pour localiser des coefficients à la taille d'un mot d'opérandes polynomiaux à l'intérieur de ladite mémoire (12) ou des registres de travail (14), (b) des informations concernant des longueurs de mot d'opérandes polynomiaux, et (c) des informations d'adresse de destination pour des résultats intermédiaires d'étapes d'opération.

7. Matériel de calcul selon l'une des revendications 5 et 6, dans lequel la constante polynomiale préalablement stockée $u(x)$ dans ladite mémoire (12) est obtenue à partir d'un calcul préalable suivant l'équation $u(x) = x^{2k+w}/m(x)$.

8. Matériel de calcul selon la revendication 7, dans lequel l'estimation dudit quotient polynomial approximatif $q(x)$ réalisée par ladite unité de calcul (10) sous le contrôle dudit séquenceur d'opérations (16) exécutant des instructions de programme est effectuée suivant l'équation $q(x) = ((p(x) \cdot x^{k-w}) \cdot (x))/x^{k+2w}$.

9. Matériel de calcul selon l'une des revendications 5 à 8, dans lequel le générateur de nombres aléatoires (20) a une limite d'erreur spécifiée d'un demi-mot, de sorte que $0 < \deg (E(x)) < w/2$.

*Fig._ 1*

POLYNOMIAL
FUNCTION
$r(x) = p(x)$ (MOD M(x))
OVER GF ($2^n$)

PRECOMPUTE
AND STORE
$u(x) = x^{2k+w}/M(x)$

30

COMPUTE
POLYNOMIAL
QUOTIENT
$q(x) = ((p(x)/x^{k-w}) \cdot u(x))/x^{k+2w}$

32

GENERATE
RANDOM
POLYNOMIAL
ERROR E(x)

34

RANDOMIZE
POLYNOMIAL
QUOTIENT
$q'(x) = q(x) + E(x)$

36

COMPUTE
POLYNOMIAL
REMAINDER
$r'(x) = p(x) + q'(x) \cdot M(x)$

38

RETURN

*Fig._ 2*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 6366673 B1

**Non-patent literature cited in the description**

- Comparison of three modular reduction functions. **A. BOSSELAERS et al.** Advances in Cryptology/Crypto '93, LNCS 773. Springer-Verlag, 1994, 175-186

- **JEAN FRANÇOIS DHEM.** Design of an efficient public-key cryptographic library for RISC-based smart cards. *doctoral dissertation,* May 1998
- **C. H. LIM et al.** Fast Modular Reduction With Precomputation. CiteSeer Scientific Literature Library, 1999